# EUROPÄISCHE PATENTSCHRIFT

(11) **EP 1 416 134 B1**
(45) Veröffentlichungstag und Bekanntmachung des Hinweises auf die Patenterteilung: **06.04.2005**
(21) Anmeldenummer: 03450236.9
(22) Anmeldetag: 23.10.2003
(51) Int. Cl.: F02B 39/04, F02B 39/12

(54) **Brennkraftmaschine mit einer Kurbelwelle**
Internal combustion engine with crank shaft
Moteur à combustion interne avec un vilebrequin

(30) Priorität: 29.10.2002 AT 72602 U
(43) Veröffentlichungstag der Anmeldung: 06.05.2004
(73) Patentinhaber: AVL List GmbH, 8020 Graz (AT)
(72) Erfinder: Laimböck, Franz, Prof. Dr., 8051 Thal (AT)
(74) Vertreter: Babeluk, Michael, Dipl.-Ing.

(56) Entgegenhaltungen:
- EP-A- 0 293 930
- US-A- 4 229 988
- US-A- 5 117 799
- US-A- 5 394 853
- US-A1- 2002 032 088

## Beschreibung

Die Erfindung betrifft eine Brennkraftmaschine mit einer Kurbelwelle, welche über ein erstes variables Übersetzungsgetriebe zumindest eine Motorausgangswelle antreibt, mit einem mechanisch über ein zweites variables Übersetzungsgetriebe angetriebenen Ladegebläse, welches als CVT-Riemengetriebe ausgebildet ist, dessen im Umschlingungsradius veränderbares Antriebsscheibenrad von einer vorzugsweise durch die Kurbelwelle gebildeten treibenden Welle angetrieben ist.

Brennkraftmaschinen der eingangs genannten Art werden beispielsweise bei kleinvolumigen Motorrollern oder Kleinmotorrädern eingesetzt. Die Kraftübertragung zwischen Brennkraftmaschine und Motorausgangswelle erfolgt dabei häufig über ein CVT-Riemengetriebe (Continuously Variable Transmission), welches über einen fliehkraftabhängigen Aktuator betätigt wird. Zur Erzielung einer hohen Anfahrbeschleunigung kann ein Ladegebläse eingesetzt werden. Um die für kleinvolumige Motorroller häufig festgelegten gesetzlichen Bauarthöchstgeschwindigkeiten einzuhalten, ist jedoch insbesondere bei höherer Fahrzeuggeschwindigkeit eine Entkoppelung der Drehzahl des Ladegebläses von der Motordrehzahl wünschenswert, um die maximale Leistung am Übersetzungspunkt der maximalen Geschwindigkeit zu limitieren. Dies kann mit einem separaten Aktuator für das Ladegebläse erreicht werden, was aber den konstruktiven und baulichen Aufwand sowie den Platzbedarf wesentlich erhöhen würde.

Die US 5,394,853 A und die US 5,462,035 A beschreiben Antriebssysteme für Ladegebläse, wobei die Antriebsenergie jeweils über ein CVT-Riemengetriebe (Continuously Variable Transmission) übertragen wird. Für die Regelung des CVT-Riemengetriebes ist ein eigener Aktuator erforderlich.

Aus der JP 09-088620 A ist eine Brennkraftmaschine bekannt, welche über ein CVT-Riemengetriebe ein Ladegebläse antreibt. Auch die JP 07-286526 A zeigt eine Brennkraftmaschine mit einem CVT-Getriebe im Antriebssystem eines Ladegebläses.

Des weiteren ist aus der WO 89/02521 A1 ein mechanischer Antrieb für ein Ladegebläse einer Brennkraftmaschine bekannt, wobei der Rotor des Ladegebläses von der Kurbelwelle der Brennkraftmaschine aus über einen Drehzahlvariator, einer elektromagnetisch betätigten Trennkupplung, sowie einem Übersetzungsgetriebe angetrieben wird. Das Übersetzungsgetriebe ist dabei als Planetengetriebe ausgebildet.

Aufgabe der Erfindung ist es, bei einer Brennkraftmaschine der eingangs genannten Art auf möglichst einfache Weise im unteren Drehzahlbereich ein hohes Drehmoment zu erreichen und im Bereich der Bauarthöchstgeschwindigkeit die maximale Leistung zu limitieren.

Erfindungsgemäß wird dies dadurch erreicht, dass auch das erste Übersetzungsgetriebe als CVT-Riemengetriebe ausgebildet ist, dessen im Umschlingungsradius veränderbares Antriebsscheibenrad auf der gleichen Welle wie das Antriebsscheibenrad des zweiten Übersetzungsgetriebes angeordnet ist, und dass die Umschlingungsradien der Antriebsscheibenräder gegensinnig synchron durch einen Aktuator veränderbar sind.

Dadurch, dass die Umschlingungsradien der Antriebsscheibenräder des ersten Übersetzungsgetriebes und des zweiten Übersetzungsgetriebes ungleichsinnig zueinander verändert werden, kann beim Anfahren des Fahrzeuges eine relativ hohe Aufladung und bei höherer Fahrzeuggeschwindigkeit, also hoher Übersetzung des ersten Übersetzungsgetriebes, eine relativ niedrige Aufladung erreicht werden. Dabei ist es vorteilhaft, wenn bei niedrigster Übersetzung des ersten Übersetzungsgetriebes das Antriebsscheibenrad des ersten Übersetzungsgetriebes einen minimalen Umschlingungsradius und das Antriebsscheibenrad des zweiten Übersetzungsgetriebes einen maximalen Umschlingungsradius aufweist. Analog dazu weist bei maximaler Übersetzung des ersten Übersetzungsgetriebes das Antriebsscheibenrad des ersten Übersetzungsgetriebes einen maximalen Umschlingungsradius und das Antriebsscheibenrad des zweiten Übersetzungsgetriebes einen minimalen Umschlingungsradius auf.

Vorzugsweise ist dabei vorgesehen, dass jedes Antriebsscheibenrad eine äußere und eine innere konusförmige Radscheibe aufweist, wobei die äußeren Radscheiben unverschiebbar mit der treibenden Welle und die inneren Radscheiben axial verschiebbar mit der treibenden Welle verbunden sind.

Die gegensinnige Veränderung der Umschlingungsradien der Antriebsscheibenräder wird auf einfache Weise dadurch ermöglicht, dass die inneren Radscheiben vorzugsweise starr miteinander verbunden sind. Dabei ist vorzugsweise vorgesehen, dass die inneren Radscheiben durch den Aktuator axial in Abhängigkeit der Drehzahl der treibenden Welle verschiebbar sind.

In einer konstruktiv sehr einfachen Ausführungsvariante ist vorgesehen, dass der Aktuator durch einen Fliehkraftregler gebildet ist. Das Fliehkraftstellglied kann beispielsweise mehrere Wälzkörper enthalten, welche durch die Fliehkraftwirkung nach außen gedrückt werden und somit eine Spreizung der Radscheiben bezüglich einer unverschiebbaren Druckplatte bewirken.

Die Erfindung wird im Folgenden anhand der Figuren näher erläutert.

Es zeigen
- Fig. 1: einen Antriebsstrang einer erfindungsgemäßen Brennkraftmaschine in einem Längsschnitt,
- Fig. 2: ein Detail aus Fig. 1; und

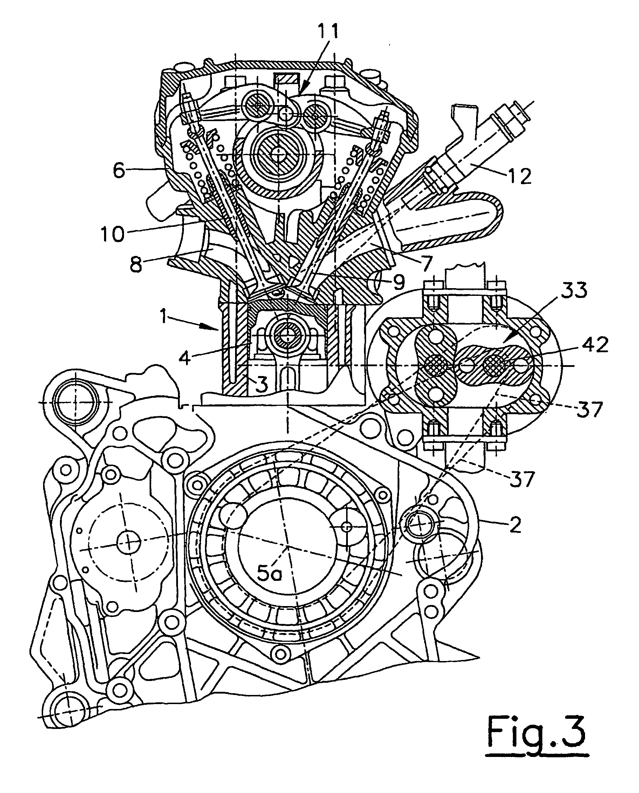

- Fig. 3: die erfindungsgemäße Brennkraftmaschine in einem Schnitt quer zur Kurbelwelle.

Die in den Figuren dargestellte Viertakt-Brennkraftmaschine 1 weist eine in einem Kurbelgehäuse 2 gelagerte, von zumindest einem in einen Zylinder 3 hinund hergehenden Kolben 4 angetriebene Kurbelwelle 5 auf. Mit Bezugszeichen 6 ist ein zumindest einen Einlasskanal 7 und zumindest einen Auslasskanal 8 samt Gaswechselventilen 9, 10 und entsprechende Ventilbetätigungseinrichtung 11 aufnehmender Zylinderkopf bezeichnet. In den Einlasskanal 7 mündet eine indirekt Kraftstoff einspritzende Einspritzeinrichtung 12.

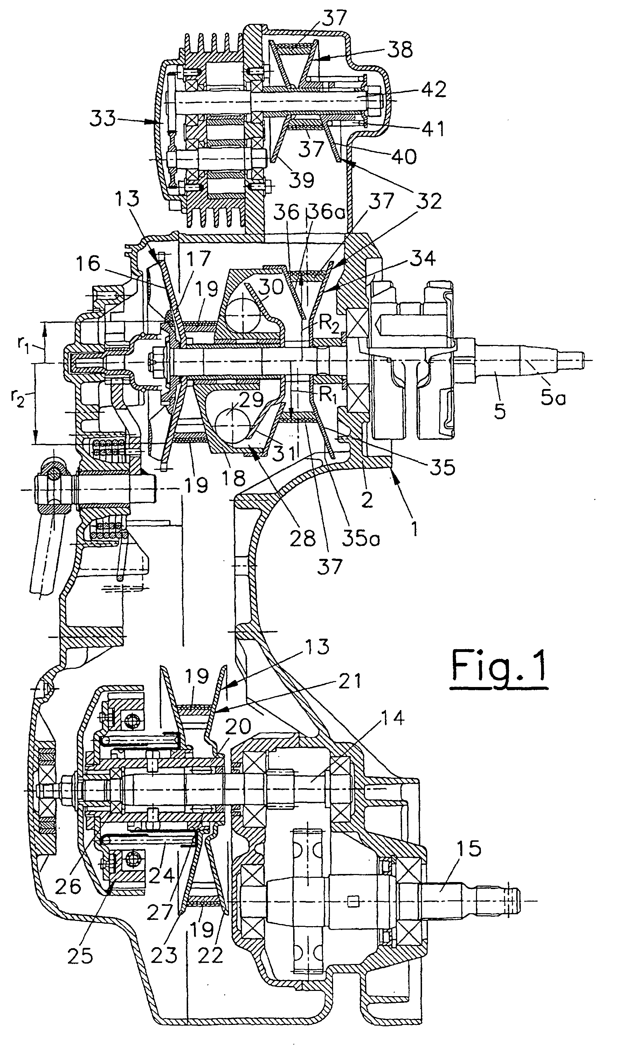

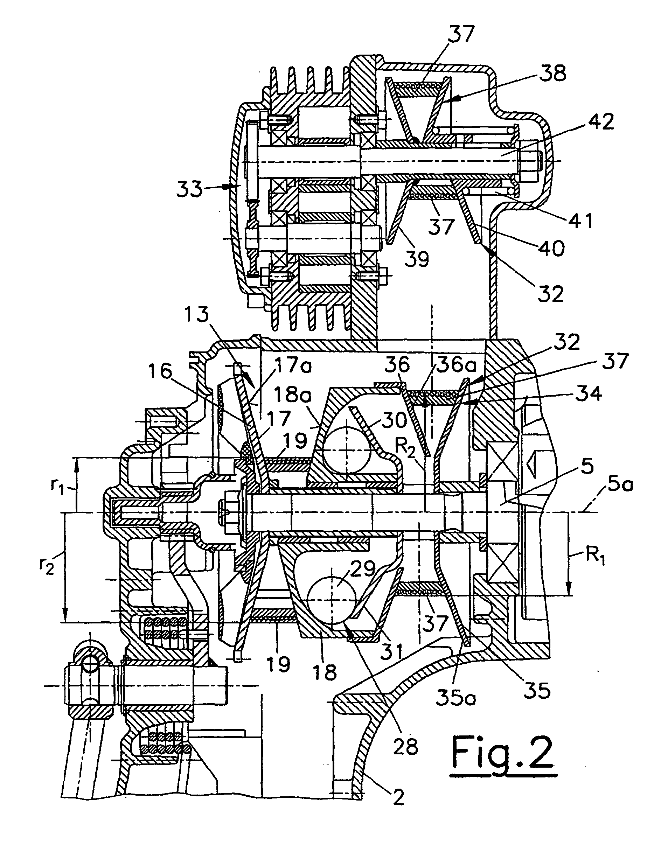

Die Kurbelwelle 5 wirkt über ein erstes variables, als CVT-Riemengetriebe ausgebildetes Übersetzungsgetriebe 13 auf eine Zwischenwelle 14 ein, welche über eine Motorausgangswelle 15 zumindest ein nicht weiter dargestelltes Antriebsrad antreibt. Das erste Übersetzungsgetriebe 13 weist auf der Kurbelwelle 5 ein Antriebsscheibenrad 16 mit einer äußeren und einer inneren Radscheibe 17, 18 mit konischen Auflageflächen 17a, 18a für den Riemen 19 auf. Die innere Radscheibe 18 ist axial verschiebbar ausgeführt, so dass der Umschlingungsradius des Antriebsscheibenrades 16 für den Riemen 19 zwischen einem minimalen Umschlingungsradius r₁ und einem maximalen Umschlingungsradius r₂ veränderbar ist. Der minimale Umschlingungsradius r₁ entspricht dabei dem Leerlauf bzw. der niedrigsten Übersetzung des ersten Übersetzungsgetriebes 13, der maximale Umschlingungsradius r₂ der höchsten Übersetzung. In den Fig. 1 und Fig. 2 sind niedrigste bzw. höchste Übersetzung des ersten Übersetzungsgetriebes 13 oberhalb bzw. unterhalb der Kurbelwellenachse 5a angedeutet.

Der Riemen 19 des ersten Übersetzungsgetriebes 13 wirkt auf ein auf einer Hohlwelle 20 angeordnetes Abtriebsscheibenrad 21 ein, welches eine unveränderbare Radscheibe 22 und eine axial verschiebbare Radscheibe 23 aufweist. Die axial verschiebbare Radscheibe 23 wird durch eine Druckfeder 24 in Richtung der unverschiebbaren Radscheibe 22 gedrückt.

Innerhalb der Hohlwelle 20 ist die Zwischenwelle 14 angeordnet, wobei die Hohlwelle 20 über Lager 26, 27 auf der Zwischenwelle 14 gelagert ist. Mit Bezugszeichen 25 ist eine Fliehkraftkupplung bezeichnet. Ab einer vorbestimmten Mindestdrehzahl des Antriebsscheibenrades 21 wird die Fliehkraftkupplung 25 wird eine Drehverbindung zwischen der Hohlwelle 20 und der Zwischenwelle 14 hergestellt, welche über eine nicht weiter dargestellte Getriebestufe auf die Motorausgangswelle 15 einwirkt.

Die Verstellung des Umschlingungsradius des Antriebsscheibenrades 16 des ersten Übersetzungsgetriebes 13 erfolgt durch einen auf die axial verschiebbare Radscheibe 18 einwirkenden Aktuator 28 in Abhängigkeit der Drehzahl der Kurbelwelle 5. Der Aktuator 28 ist dabei als Fliehkraftversteller mit beispielsweise durch Kugeln gebildete Fliehkraftstellglieder 29 ausgeführt, welche sich an einer unverschiebbar mit der Kurbelwelle 5 verbundenen tellerförmigen Druckplatte abstützen. Bei steigender Drehzahl werden die Fliehkraftkörper 29 radial nach außen entlang des geneigten Randes 31 der Druckscheibe 30 gedrückt, wodurch die axial verschiebbare Radscheibe 18 in Richtung der unverschiebbaren Radscheibe 17 bewegt und somit ein größerer Umschlingungsradius des Antriebsscheibenrades 16 des ersten Übersetzungsgetriebes 13 realisiert wird.

Von der Kurbelwelle 5 wird über ein ebenfalls als CVT-Riemengetriebe ausgeführtes zweites variables Übersetzungsgetriebe 32 ein mechanisches Ladegebläse 33 angetrieben. Das zweite Übersetzungsgetriebe 32 weist auf der Kurbelwelle 5 ein Antriebsscheibenrad 34 mit einer unverschiebbaren Radscheibe 35 und einer axial verschiebbaren inneren Radscheibe 36 auf. Die Auflageflächen 35a und 36a für den Riemen 37 sind - wie beim ersten Übersetzungsgetriebe 13 - konisch ausgebildet, so dass durch axiale Verstellung der verschiebbaren Radscheibe 36 der Umschlingungsradius des Antriebsscheibenrades 34 zwischen einem minimalen Umschlingungsradius R₁ und einem maximalen Umschlingungsradius R₂ verändert werden kann.

Das Antriebsscheibenrad 34 des zweiten Übersetzungsgetriebes 32 wirkt über den Riemen 37 auf ein Abtriebsscheibenrad 38 ein, welches eine nicht verschiebbare und eine axial verschiebbare Radscheibe 39, 40 aufweist. Die verschiebbare Radscheibe 40 wird durch eine Druckfeder 41 gegen die nicht verschiebbare Radscheibe vorgespannt. Das Abtriebsscheibenrad 38 ist auf einer Ladegebläsewelle 42 angeordnet und treibt das mechanische Ladegebläse 33 an.

Die axial verschiebbare innere Radscheibe 36 des Antriebsscheibenrades 34 des zweiten Übersetzungsgetriebes 32 ist fest mit der axial verschiebbaren inneren Radscheibe 18 des Antriebsscheibenrades 16 des ersten Übersetzungsgetriebes 13 verbunden und kann somit gleichzeitig mit dieser durch den Aktuator 28 verstellt werden. Die inneren Radscheiben 18 und 36 können auch einstückig ausgeführt sein. Die Veränderung der Umschlingungsradien der Antriebsscheibenräder 16, 34 des ersten Übersetzungsgetriebes 13 und des zweiten Übersetzungsgetriebes 32 erfolgt dabei gegensinnig synchron. Dies bedeutet, dass bei Leerlauf und niedriger Drehzahl das Antriebsscheibenrad 16 des ersten Übersetzungsgetriebes 13 den minimalen Umschlingungsradius r₁, das Antriebsscheibenrad 34 des zweiten Übersetzungsgetriebes 32 aber den maximalen Umschlingungsradius R₂ annimmt. Bei hoher Übersetzung dagegen weist das Antriebsscheibenrad 16 des ersten Übersetzungsgetriebes 13 den maximalen Umschlingungsradius r₂, Das Antriebsscheibenrad 34 des zweiten Übersetzungsgetriebes 32 aber den minimalen Umschlingungsradius R₁ auf.

Dadurch, dass die Umschlingungsradien der beiden Antriebsscheibenräder 16, 34 gegensinnig verändert werden, kann das Übersetzungsverhältnis der Kurbelwelle 5 zum Ladegebläse 33 den Erfordernissen eines geschwindigkeitsbegrenzten Fahrzeuges, beispielsweise eines Motorrollers oder Kleinmotorrades, angepasst werden. Bei unteren Motordrehzahlen steht somit ein maximales Drehmoment zur Verfügung, bei der Bauarthöchstgeschwindigkeit wird die maximale Leistung limitiert.

## Patentansprüche

1. Brennkraftmaschine (1) mit einer Kurbelwelle (5), welche über ein erstes variables Übersetzungsgetriebe (13) zumindest eine Motorausgangswelle (15) antreibt, mit einem mechanisch über ein zweites variables Übersetzungsgetriebe (32) angetriebenen Ladegebläse (33), welches als CVT-Riemengetriebe ausgebildet ist, dessen im Umschlingungsradius veränderbares Antriebsscheibenrad (34) von einer vorzugsweise durch die Kurbelwelle (5) gebildeten treibenden Welle angetrieben ist, **dadurch gekennzeichnet, dass** auch das erste Übersetzungsgetriebe (13) als CVT-Riemengetriebe ausgebildet ist, dessen im Umschlingungsradius veränderbares Antriebsscheibenrad (16) auf der gleichen Welle wie das Antriebsscheibenrad (34) des zweiten Übersetzungsgetriebes (32) angeordnet ist, und dass die Umschlingungsradien der Antriebsscheibenräder (16, 34) gegensinnig synchron durch einen Aktuator (28) veränderbar sind.

2. Brennkraftmaschine (1) nach Anspruch 1, **dadurch gekennzeichnet, dass** jedes Antriebsscheibenrad (16, 34) eine äußere und eine innere konusförmige Radscheibe (17, 18; 35, 36) aufweist, wobei die äußeren Radscheiben (17, 35) unverschiebbar mit der treibenden Welle und die inneren Radscheiben (18, 36) axial verschiebbar mit der treibenden Welle verbunden sind.

3. Brennkraftmaschine (1) nach Anspruch 2, **dadurch gekennzeichnet, dass** die inneren Radscheiben (18, 36) vorzugsweise starr miteinander verbunden sind.

4. Brennkraftmaschine (1) nach Anspruch 2 oder 3, **dadurch gekennzeichnet, dass** die inneren Radscheiben (18, 36) durch den Aktuator (28) axial in Abhängigkeit der Drehzahl der treibenden Welle verschiebbar sind.

5. Brennkraftmaschine (1) nach einem der Ansprüche 1 bis 4, **dadurch gekennzeichnet, dass** der Aktuator (28) durch einen Fliehkraftregler gebildet ist.

6. Brennkraftmaschine (1) nach einem der Ansprüche 1 bis 5, **dadurch gekennzeichnet, dass** bei Leerlauf oder bei niedrigster Übersetzung des ersten Übersetzungsgetriebes (13) das Antriebsscheibenrad (16) des ersten Übersetzungsgetriebes (13) einen minimalen Umschlingungsradius (r₁) und das Antriebsscheibenrad (34) des zweiten Übersetzungsgetriebes (32) einen maximalen Umschlingungsradius (R₂) aufweist.

7. Brennkraftmaschine (1) nach einem der Ansprüche 1 bis 6, **dadurch gekennzeichnet, dass** bei maximaler Übersetzung des ersten Übersetzungsgetriebes (13) das Antriebsscheibenrad (16) des ersten Übersetzungsgetriebes (13) einen maximalen Umschlingungsradius (r₂) und das Antriebsscheibenrad (34) des zweiten Übersetzungsgetriebes (32) einen minimalen Umschlingungsradius (R₁) aufweist.

## Claims

1. An internal combustion engine (1) with a crankshaft (5) which drives at least one motor output shaft (15) via a first variable speed-transforming transmission (13), comprising a supercharger (33) which is driven mechanically via a second variable speed-transforming transmission (32) and which is configured as a CVT belt gear whose drive wheel gear with a changeable radius of wrap is preferably driven by the driving shaft formed by the crankshaft (5), **characterized in that** the first speed-transforming transmission (13) is arranged as a CVT belt gear whose drive wheel gear (16) with changeable radius of wrap is arranged on the same shaft as the drive wheel gear (34) of the second speed-transforming transmission (32) and that the radii of the drive wheel gears (16, 34) can be changed synchronously in the opposite direction by an actuator (28).

2. An internal combustion engine (1) according to claim 1, **characterized in that** every drive wheel gear (16, 34) has an outer and an inner conical wheel disk (17, 18; 35, 36), with the outer wheel disks (17, 35) being joined non-displaceably with the driving shaft and the inner wheel disks (18, 35) axially displaceably with the driving shaft.

3. An internal combustion engine (1) according to claim 2, **characterized in that** the inner wheel disks (18, 36) are preferably rigidly connected with each other.

4. An internal combustion engine (1) according to claim 2 or 3, **characterized in that** the inner wheel disks (18, 36) are axially displaceable by the actuator (28) depending on the speed of the driving shaft.

5. An internal combustion engine (1) according to one of the claims 1 to 4, **characterized in that** the actuator (28) is formed by a centrifugal governor.

6. An internal combustion engine (1) according to one of the claims 1 to 5, **characterized in that** in no-load operation or at the lowest transmission of the first speed-transforming transmission (13) the drive wheel gear (16) of the first speed-transforming transmission (13) has a minimum radius of wrap (r₁) and the drive wheel gear (34) of the second speed-transforming transmission (32) has a maximum radius of wrap (R₂).

7. An internal combustion engine (1) according to one of the claims 1 to 6, **characterized in that** in the case of maximum multiplication of the first speed-transforming transmission (13) the drive wheel gear (16) of the first speed-transforming transmission (13) has a maximum radius of wrap (r₂) and the drive wheel gear (34) of the second speed-transforming transmission (32) has a minimum radius of wrap (R₁).

## Revendications

1. Moteur à combustion interne comportant un vilebrequin (5) entraînant au moins un arbre de sortie de moteur (15) par l'intermédiaire d'au moins une première transmission à variation continue (13), un ventilateur de suralimentation (33) entraîné mécaniquement par une seconde transmission à variation continue (32) réalisée sous la forme d'une transmission mécanique à courroie d'acier CVT, dont le rayon d'enveloppement de la poulie conique (34) à rayon d'enveloppement variable est entraîné par un arbre moteur constitué de préférence par le vilebrequin (5),
**caractérisé en ce que**
la première transmission à variation continue (13) est une transmission mécanique à courroie d'acier CVT dont la poulie conique d'entraînement (16) à rayon d'enveloppement variable est montée sur le même arbre que la poulie conique d'entraînement (34) de la seconde transmission à variation continue (32), et
les rayons d'enveloppement des poulies coniques d'entraînement (16, 34) sont modifiés par un actionneur (28) en synchronisme et en sens opposé.

2. Moteur à combustion interne (1) selon la revendication 1,
**caractérisé en ce que**
chaque poulie d'entraînement (16, 34) comporte une joue de poulie conique extérieure et une joue de poulie conique intérieure (17, 18 ; 35, 36), les joues coniques extérieures (17, 35) étant solidaires de l'arbre moteur et les joues coniques intérieures (18, 36) étant reliées à l'arbre moteur de manière coulissante axialement.

3. Moteur à combustion interne (1) selon la revendication 2,
**caractérisé en ce que**
les joues de poulie intérieures (18, 36) sont reliées de préférence de manière rigide.

4. Moteur à combustion interne (1) selon la revendication 1 ou 2,
**caractérisé en ce que**
les joues de poulie intérieures (18, 36) sont coulissées axialement par l'actionneur (18) en fonction de la vitesse de rotation de l'arbre moteur.

5. Moteur à combustion interne (1) selon l'une des revendications 1 à 4,
**caractérisé en ce que**
l'actionneur (28) comporte un régulateur centrifuge.

6. Moteur à combustion interne (1) selon l'une des revendications 1 à 5,
**caractérisé en ce qu'**
au ralenti ou pour le rapport de démultiplication le plus faible de la première transmission à variation continue (13), la poulie d'entraînement (16) de cette première transmission à variation continue (13) présente un rayon d'enveloppement minimum (r₁) et la poulie d'entraînement (34) de la seconde transmission à variation continue (32) présente un rayon d'enveloppement maximum (R₂).

7. Moteur à combustion interne (1) selon l'une des revendications 1 à 6,
**caractérisé en ce que**
pour la démultiplication maximum de la première transmission à variation continue (13), la poulie d'entraînement (16) de cette première transmission (13) présente un rayon d'enveloppement maximum (r₂) et la poulie d'entraînement (34) de la seconde transmission à variation continue (32) présente un rayon d'enveloppement minimum (R₁).
